Europäisches Patentamt

European Patent Office

Office européen des brevets

(19)

(11) Veröffentlichungsnummer: **0 036 615**
**B1**

(12) # EUROPÄISCHE PATENTSCHRIFT

(45) Veröffentlichungstag der Patentschrift:
05.12.84

(21) Anmeldenummer: 81101980.1

(22) Anmeldetag: 17.03.81

(51) Int. Cl.³: **A 23 B 7/148**, A 23 B 7/144,
A 23 B 7/152, B 65 D 81/28

(54) **Vorrichtung zur Erzeugung von Gas oder Gasgemischen bei der Gaslagerung von Lebensmittein, insbesondere Obst.**

(30) Priorität: 26.03.80 IT 1249580

(43) Veröffentlichungstag der Anmeldung:
30.09.81 Patentblatt 81/39

(45) Bekanntmachung des Hinweises auf die Patenterteilung:
05.12.84 Patentblatt 84/49

(84) Benannte Vertragsstaaten:
AT BE CH DE FR GB LI LU NL SE

(56) Entgegenhaltungen:
DE - A - 2 133 164
FR - A - 1 462 191
FR - A - 1 524 872
FR - A - 2 182 522
FR - A - 2 241 323
FR - A - 2 291 115
FR - A - 2 345 363
GB - A - 801 136
US - A - 2 511 987
US - A - 3 183 057
US - A - 4 256 770

(73) Patentinhaber: **KONTEK TECNOLOGIE DELLA CONSERVAZIONE S.R.L.**, Via Zaccherini Alvisi 2/2, I-40138 Bologna (IT)

(72) Erfinder: **Cimino, Andrea, Dr.**, Via Protti 7, I-40139 Boiogna (IT)
Erfinder: **Plicchi, Gianni, Dr.**, Via Croara 40, I-40068 San Lazzaro di Savena (IT)
Erfinder: **Mangiarotti, Luigi, Dr.**, Via Wiligelmo 7, I-40100 Bologna (IT)
Erfinder: **Rossi, Maurizio, Dr.**, Via Ca Rotte 22, I-45021 Badia Polesine (IT)
Erfinder: **Betti, Vittorio, Dr.**, Via Dal Pozzo 36, I-48018 Faenza (IT)
Erfinder: **Spighi, Massimo, Dr.**, Via Palazzina 9, I-40021 Borgo Tossignano (IT)
Erfinder: **Zingaretti, Gabriele, Dr.**, Via Leoncavallo, 1, I-40137 Bologna (IT)

(74) Vertreter: **Porsia, Dino, Dr.**, c/o Succ. Ing. Fischetti & Weber Via Caffaro 3, I-16124 Genova (IT)

## Beschreibung

Die Erfindung betrifft eine Vorrichtung zur Erzeugung von Gas oder Gasgemischen bei der Gaslagerung von Lebensmitteln, insbesondere Obst, Gemüse od. dgl. in gasdicht verschlossenen Lagerräumen oder Lager- bzw. Transportbehältern, mit einem an sich wasserdichten, jedoch gasdurchlässigen, einen festen Ausgangsstoff für die Lagergaserzeugung enthaltenden Hauptgefäss und einem allseitig dicht verschlossenen, im Hauptgefäss untergebrachten, einen flüssigen Ausgangsstoff für die Lagergaserzeugung enthaltenden Hilfsgefäss, wobei eine im Inneren des Hauptgefässes liegende Begrenzungswand des Hilfsgefässes durch äussere Einwirkung durchbrechbar ist, um den flüssigen Ausgangsstoff mit dem festen Ausgangsstoff zusammenzuführen und dadurch eine chemische Reaktion zwischen den beiden Stoffen zur Erzeugung des Lagergases auszulösen.

In einer bekannten Vorrichtung dieser Art (FR-A-2 345 363) ist das den flüssigen Ausgangsstoff enthaltende Hilfsgefäss blasenförmig ausgebildet und in einem ebenfalls blasenförmigen, den festen Ausgangsstoff enthaltenden Hauptgefäss enthalten. Zur Gaserzeugung wird das blasenförmige Hilfsgefäss durch äusseren Druck zum Platzen gebracht. Der Nachteil dieser Vorrichtung besteht darin, dass sich beim Platzen des blasenförmigen Hilfsgefässes der gesamte, darin enthaltene, flüssige Ausgangsstoff sofort mit dem festen Ausgangsstoff vermischt und infolgedessen eine heftige aber kurzzeitige chemische Reaktion mit plötzlicher Entwicklung der gesamten, zu erzeugenden Gasmenge auslöst. Bei der Gaslagerung von Lebensmitteln ist es dagegen erforderlich bzw. zweckmässig, die Lagergasentwicklung nicht schlagartig zu gestalten, sondern auf eine möglichst lange Zeitdauer auszudehnen, um die unvermeidlichen Leckverluste auszugleichen.

Es ist auch eine Einrichtung zur Erzeugung von Wärme durch wahlweise auslösbare exotherme chemische Reaktion bekannt (DE-A 2 133 164), bei der zwei übereinanderliegende, durch eine Zwischenwand voneinander getrennte Kammern je eine chemische Substanz enthalten und die Zwischenwand von aussen durchstechbar ist, um die Substanzen zusammenzuführen und durch ihre exotherme Reaktion Wärme zu erzeugen. Abgesehen davon, dass diese Einrichtung keine Mittel zum Entweichen von eventuell erzeugten Gasen aufweist, würde sie sich bei ihrer Anwendung zur Erzeugung eines Lagergases durch Zusammenführung eines flüssigen und eines festen Ausgangsstoffs noch dadurch als nachteilig erweisen, dass die beiden übereinanderliegenden Kammern und ihre Zwischenwand einstückig ausgebildet sind oder die obere, getrennt hergestellte Kammer direkt auf dem in der unteren Kammer enthaltenen Ausgangsstoff aufliegt. Die erste Ausführungsform erfordert aufwendige Herstellungsverfahren und gestattet keine, zumindest teilweise Wiederverwendung der einmal benutzten Vorrichtung. Bei der zweiten Ausführungsform kommen die beiden Ausgangsstoffe nach der Durchstechung der Bodenwand der oberen Kammer im Bereich des geschaffenen Lochs miteinander in Berührung. Infolgedessen kann der Austritt des in der oberen Kammer enthaltenen, z.B. flüssigen Ausgangsstoffs durch die Reaktion der beiden Stoffe, z.B. durch Schaum- bzw. Blasenbildung od. dgl. gestört und sogar verhindert werden. Bei der Anwendung dieser Ausführungsform der bekannten Einrichtung nach der DE-A-2 133 164 zur Erzeugung von Lagergas durch chemische Reaktion zwischen einem flüssigen und einem festen Ausgangsstoff kann ausserdem der feste Ausgangsstoff in den flüssigen Ausgangsstoff diffundieren und dadurch eine unerwünschte Gasentwicklung in der den flüssigen Ausgangsstoff enthaltenden Kammer bewirken. Durch den direkten Kontakt der beiden Ausgangsstoffe im Bereich der durchgestochenen Zwischenwand wird also ein regelmässiger Reaktionsablauf im Falle der Zusammenführung eines flüssigen und eines festen Ausgangsstoff gestört und verhindert, obwohl durch die Durchstechung der Zwischenwand eine langsame bzw. andauernde Reaktion der beiden Ausgangsstoffe an sich erzielbar wäre.

Aufgabe der Erfindung ist es, diese Nachteile der bekannten Vorrichtungen zu beheben und eine Vorrichtung der eingangs beschriebenen Art zu schaffen, bei der der flüssige und der feste Ausgangsstoff nicht schlagartig sondern allmählich innerhalb einer bestimmten Zeitdauer zusammengeführt werden und miteinander reagieren, wobei die Zusammenführung der beiden Ausgangsstoffe und deren Reaktion, insbesondere der gleichmässige Eintritt des flüssigen Ausgangsstoffs aus dem Hilfsgefäss in das Hauptgefäss nicht gestört werden können und die Vorrichtung einfach und wirtschaftlich herstellbar und nach Gebrauch teilweise wieder verwendbar ist.

Diese Aufgabe wird erfindungsgemäss dadurch gelöst, dass das Hilfsgefäss im Abstand über dem Boden des beckenförmigen Hauptgefässes zwischen Auflagerabsätzen der seitlichen Hauptgefässwandungen und einem das Hauptgefäss oberseitig fest aber undicht abschliessenden Deckel festgeklemmt ist, wobei dieser Deckel, die obere Abschlusswand und die Bodenwand des Hilfsgefässes von aussen in einem Zug durchstechbar sind.

Bei der erfindungsgemässen Ausbildung der Vorrichtung kann das Werkzeug zum Durchstechen des Deckels, der oberen Abschlusswand und der Bodenwand des Hilfsgefässes einen solchen Durchmesser aufweisen bzw. die Anzahl der Stiche kann derart festgelegt werden, dass sich der flüssige Ausgangsstoff mit einer vorbestimmten Durchflussmenge aus dem Hilfsgefäss in das darunterliegende Hauptgefäss ergiesst. Dadurch kann die gaserzeugende Reaktion zeitlich geregelt und in die Länge gezogen werden. Da ausserdem das Hilfsgefäss im Abstand über dem Boden des Hauptgefässes auf Auflagerabsätzen der Hauptgefässwandungen gelagert ist, braucht der darunterliegende Raum des Hauptgefässes nicht ganz mit dem festen Ausgangsstoff gefüllt zu werden. Die Oberfläche des festen, im Hauptgefäss enthaltenen Ausgangsstoffs kann vielmehr im Abstand unter der Bodenwand des darüberliegenden Hilfsgefässes eingestellt werden. Nach der Durchstechung der Bodenwand des Hilfsgefässes tropft bzw. ergiesst sich deshalb der flüssige Ausgangsstoff aus einer bestimmten Höhe auf den darunterliegenden, festen Ausgangsstoff. Eventuelle Schaum- bzw. Blasenbildungen auf der Oberfläche des festen Ausgangsstoffs können die im Abstand darüberliegende Bodenwand des Hilfsgefässes kaum erreichen und infolgedessen den gleichmässigen Austritt des flüssigen Ausgangsstoffs durch das Ausflussloch nicht stören bzw. verhindern. Schliesslich sind sowohl das Hauptgefäss als auch das Hilfsgefäss leicht und wirtschaftlich herstellbar, wobei das beckenförmige Hauptgefäss kostensparend wiederverwendbar ist. Für die Herstellung einer neuen Vorrichtung sind nur das Hilfsgefäss mit dem flüssigen Ausgangsstoff und der Deckel neu einzusetzen.

Herstellungstechnisch besonders einfach ist eine Ausführungsform der erfindungsgemässen Vorrichtung, bei der die Auflagerabsätze für das Hilfsgefäss aus nischenförmigen Ausbuchtungen der seitlichen Wandungen des Hauptgefässes bestehen. Nach einem weiteren Merkmal der Erfindung kann das Durchstechen des Hauptgefässdeckels erleichtert und insbesondere auch das Entweichen des erzeugten Lagergases gefördert werden, wenn der Deckel des Hauptgefässes aus gasdurchlässigem Werkstoff oder Pappe, insbesondere Wellpappe besteht.

Als Schutz gegen das Eindringen von Feuchtigkeit kann das Hauptgefäss in einer zerreissbaren oder mit vorzugsweise seitlichen Gasabzugsöffnungen versehenen Schutzhülle aus insbesondere durchsichtiger Kunststoff-Folie, vorzugsweise Schrumpffolie eingeschlossen sein. Als Hinweis zum Ansetzen des Stechwerkzeugs kann die Schutzhülle oder der Deckel des Hauptgefässes eine im mittleren Bereich des Hilfsgefässes angeordnete Markierung aufweisen.

Ein Ausführungsbeispiel der Erfindung ist in der Zeichnung dargestellt und soll nachstehend genauer beschrieben werden.

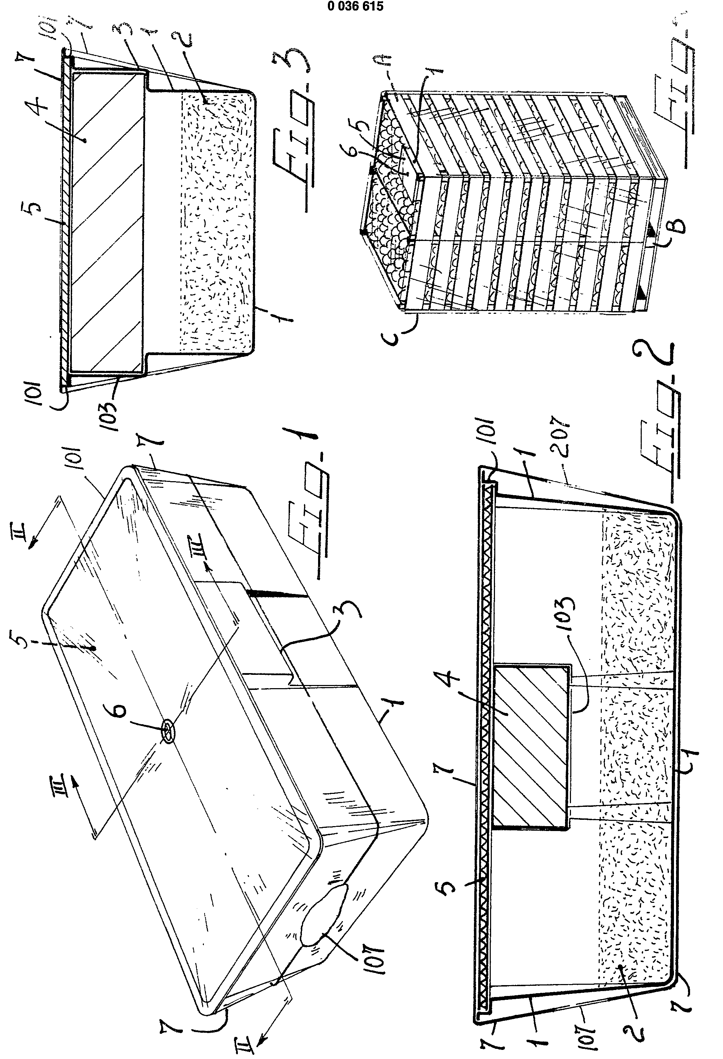

Fig. 1 zeigt in schaubildlicher Darstellung eine erfindungsgemässe Vorrichtung zur Erzeugung von Lagergas bei der Gaslagerung von Lebensmitteln, insbesondere Obst, Gemüse od. dgl.; Fig. 2 zeigt einen schematischen Querschnitt durch die Vorrichtung nach der Schnittlinie II–II der Fig. 1; Fig. 3 ist ein schematischer Längsschnitt durch die Vorrichtung nach der Schnittlinie III–III der Fig. 1; Fig. 4 zeigt in schaubildlicher Darstellung einen mit einer erfindungsgemässen Vorrichtung versehenen Lager- und Transportbehälter für Obst- bzw. Gemüsekisten.

Die dargestellte Vorrichtung zur Erzeugung von Lagergas bei der Gaslagerung von Lebensmitteln besteht aus einem Reaktionsgefäss, das aus einem grösseren, äusseren Hauptgefäss 1 und einem kleineren, inneren Hilfsgefäss 4 zusammengesetzt ist. Das Hauptgefäss 1 ist beckenförmig aus wasserundurchlässigem Kunststoff hergestellt und enthält einen festen, pulverförmigen oder körnigen, an sich nicht reaktionsfähigen Ausgangsstoff 2 zur Erzeugung eines Lagergases. Dieser feste Ausgangsstoff 2 kann auch eine entsprechende Stoffmischung sein. Das ebenfalls aus Kunststoff hergestellte, insbesondere blockförmige Hilfsgefäss 4 ist allseitig wasserdicht geschlossen und enthält einen flüssigen, an sich nicht reaktionsfähigen Ausgangsstoff, der in Verbindung mit dem im Hauptgefäss 1 enthaltenen, festen Ausgangsstoff 2 eine chemische Reaktion auslöst, bei der sich das gewünschte Lagergas bildet. Dabei kann auch das Hilfsgefäss 4 ein Ausgangsstoffgemisch enthalten. Das durch das Zusammenführen der beiden Ausgangsstoffe bzw. -stoffgemische erzeugte Lagergas kann ein reines Gas oder ein Gasgemisch sein.

Soll als Lagergas in an sich bekannter Weise Kohlendioxyd benutzt werden, kann der feste Ausgangsstoff 2 im Hauptgefäss 1 aus einer Mischung von Zitronensäure oder Weinsäure und Natriumbikarbonat, dagegen der flüssige Ausgangsstoff im Hilfsgefäss 4 aus Wasser bestehen. Als Lagergas kann jedoch, insbesondere bei der Lagerung von Weintrauben auch eine Mischung von Kohlendioxyd und Schwefeldioxyd benutzt werden. Zur Erzeugung dieser Lagergasmischung kann das Hauptgefäss 1 als fester Ausgangsstoff 2 eine Mischung von Zitronen- oder Weinsäure, Natriumbikarbonat und Natriumbisulfit oder Kaliumbisulfit enthalten. Dem festen Ausgangsstoff bzw. -stoffgemisch 2 im Hauptgefäss 1 können auch feuchtigkeitsabsorbierende Stoffe zum Schutz gegen eventuell eingedrungene Feuchtigkeit während der Lagerungszeit der Gaserzeugungsvorrichtung beigemischt sein.

Das beckenförmige Hauptgefäss 1 ist mit einem Deckel 5 aus Wellpappe undicht verschlossen. Das Hilfsgefäss 4 liegt dabei im Abstand vom Boden des Hauptgefässes 1 und ist von zwei inneren Auflagerabsätzen 3 und 103 abgestützt, die durch zwei entsprechende nischenförmige Ausbuchtungen in den seitlichen Begrenzungswänden des Hauptgefässes 1 gebildet werden. Der Deckel 7 liegt auf einem inneren, umlaufenden Absatz 101 am oberen Rand des Hauptgefässes 1 und wird in seinem mittleren Bereich vom darunterliegenden Hilfsgefäss 4 abgestützt. Bei dieser Ausbildung wird das Hilfsgefäss 4 zwischen den Auflagerabsätzen 3, 103 und dem am Hauptgefäss 1 befestigten Deckel 5 unbeweglich festgeklemmt. In der Längsrichtung des Hauptgefässes 1 wird die Verschiebung des Hilfsgefässes 4 durch die nischenartige Ausbildung der Auflagerabsätze 3, 103 verhindert. Das wassergefüllte Hilfsgefäss 4 kann an sich beliebig ausgebildet sein und besteht vorzugsweise aus einer an sich als Flüssigkeits- insbesondere Milchverpackung bekannten, quaderförmigen Packung.

Der Deckel 5 kann in beliebiger Weise am Hauptgefäss 1 befestigt sein. Im dargestellten Ausführungsbeispiel und insbesondere wenn der Deckel 5 aus Pappe oder Wellpappe besteht, ist das ganze Hauptgefäss 1 samt Deckel 7 in einer eng anliegenden Schutzhülle 7 aus Kunststoff-Folie, insbesondere Schrumpffolie eingeschlossen, die den Deckel 5 am Hauptgefäss 1 festhält. Die Schutzhülle 7 ist leicht aufreissbar oder weist vorzugsweise seitliche Gasabzugsöffnungen 107, 207 auf. Die Schutzhülle 7 ist ausserdem vorzugsweise durchsichtig.

Im Bereich des wassergefüllten Hilfsgefässes 4 ist auf der Aussenseite des Deckels 5 oder auf der Schutzhülle 7 eine Markierung 6 vorgesehen.

Das aus dem äusseren Hauptgefäss 1 und dem inneren Hilfsgefäss 4 bestehende Reaktionsgefäss kann in dem oben beschriebenen Zustand in beliebigen Mengen vorbereitet und beliebig lang auf Lager gehalten werden. Eine Anwendungsmöglichkeit dieser Vorrichtung bei der Gaslagerung von Obst oder Gemüse ist in Fig. 4 dargestellt. Es handelt sich dabei um einen Stempel von übereinliegenden Obst- bzw. Gemüsekisten A, die in einer gasdichten Hülle C aus insbesondere durchsichtiger Kunststoff-Folie eingeschlossen und z.B. auf einer Palette B aufgestellt ist. Dadurch wird ein gasdichter Lager- und Transportbehälter für den Kistenstapel gebildet, der in Kühlräumen gelagert wird. In der obersten Obst- bzw. Gemüsekiste A ist ein erfindungsgemässes Reaktionsgefäss zur Erzeugung von Lagergas untergebracht und zusammen mit dieser Kiste in der gasdichten Hülle C eingeschlossen.

Zu Beginn der Kühllagerung führt eine Bedienungsperson mit einem Stechwerkzeug, etwa mit einer grossen Nadel od.dgl. von aussen durch die Hülle C hindurch mindestens einen Stich in das Reaktionsgefäss im Bereich der Markierung 6 aus. Das Stechwerkzeug weist dabei eine solche Länge auf, dass es die Schutzhülle 7 und den Deckel 5 des Hauptgefässes 1 sowie die obere Abschlusswand und die Bodenwand des Nebengefässes 4, nicht aber den Boden des Hauptgefässes 1 durchsticht. Der flüssige Ausgangsstoff ergiesst sich infolgedessen aus dem Hilfsgefäss 4 in das Hauptgefäss 1 und löst in Verbindung mit dem in diesem enthaltenen festen Ausgangsstoff 2 eine chemische Reaktion aus, bei der das gewünschte Lagergas erzeugt wird. Das Stechwerkzeug weist vorzugsweise einen festen, vorbestimmten Durchmesser auf bzw. die Anzahl der Stiche ist vorbestimmt und festgelegt, so dass sich der flüssige Ausgangsstoff mit einer vorbestimmten Geschwindigkeit in das Hauptgefäss 1 ergiesst. Die gaserzeugende Reaktion kann dadurch zeitlich geregelt bzw. etwas in die Länge gezogen werden. Die in der Hülle C des Lager- bzw. Transportbehälters durch die Stiche erzeugten Löcher werden mit Hilfe von Klebestreifen od.dgl. gasdicht verschlossen. Das im Reaktionsgefäss erzeugte Lagergas entweicht durch die im Hilfsgefäss 4, im Deckel 5 und in der Schutzhülle 7 bewirkten Stichlöcher und/oder durch die undichten Stellen zwischen dem Deckel 5 und dem oberen Absatz 101 des Hauptgefässes 1 und anschliessend durch die seitlichen Gasabzugöffnungen 107, 207 der Schutzhülle 7. Das Entweichen des erzeugten Lagergases wird auch durch die Luftdurchlässigkeit des Deckels 5, insbesondere durch die Kanäle der Wellpappe begünstigt. Das derart aus dem Reaktionsgefäss entwichene Lagergas füllt die gasdichte Hülle C des Lager- und Transportbehälters der gestapelten Obst- bzw. Gemüsekisten A aus und bewirkt dadurch die für die Gaslagerung gewünschte Atmosphäre. Am Ende der Lagerung wird der von der Kunststoffhülle C gebildete Lager- bzw. Transportbehälter aufgerissen und das nunmehr leere Reaktionsgefäss zur Erzeugung des Lagergases kann weggeworfen werden.

## Patentansprüche

1. Vorrichtung zur Erzeugung von Gas oder Gasgemischen bei der Gaslagerung von Lebensmitteln, insbesondere Obst, Gemüse od.dgl. in gasdicht verschlossenen Lagerräumen oder Lager- bzw. Transportbehältern, mit einem an sich wasserdichten, jedoch gasdurchlässigen, einen festen Ausgangsstoff (2) für die Lagergaserzeugung enthaltenden Hauptgefäss (1) und einem allseitig dicht verschlossenen, im Hauptgefäss (1) untergebrachten, einen flüssigen Ausgangsstoff für die Lagergaserzeugung enthaltenden Hilfsgefäss (4), wobei eine im Inneren des Hauptgefässes (1) liegende Begrenzungswand des Hilfsgefässes (4) durch äussere Einwirkung durchbrechbar ist, um den flüssigen Ausgangsstoff mit dem festen Ausgangsstoff zusammenzuführen und dadurch eine chemische Reaktion zwischen den beiden Stoffen zur Erzeugung des Lagergases auszulösen, dadurch gekennzeichnet, dass das Hilfsgefäss (4) im Abstand über dem Boden des beckenförmigen Hauptgefässes (1) zwischen Auflagerabsätzen (3, 103) der seitlichen Hauptgefässwandungen und einem das Hauptgefäss (1) oberseitig fest aber undicht abschliessenden Deckel (5) festgeklemmt ist, wobei dieser Deckel (5), die obere Abschlusswand und die Bodenwand des Hilfsgefässes (4) von aussen in einem Zug durchstechbar sind.

2. Vorrichtung nach Anspruch 1, dadurch gekennzeichnet, dass die Auflagerabsätze (3, 103) für das Hilfsgefäss (4) aus nischenförmigen Ausbuchtungen der seitlichen Wandungen des Hauptgefässes (1) bestehen.

3. Vorrichtung nach Anspruch 1 oder 2, dadurch gekennzeichnet, dass der Deckel (5) aus gasdurchlässigem Werkstoff oder Pappe, insbesondere Wellpappe besteht.

4. Vorrichtung nach einem der Ansprüche 1 bis 3, dadurch gekennzeichnet, dass das Hauptgefäss (1) in einer zerreissbaren oder mit vorzugsweise seitlichen Gasabzugsöffnungen (107, 207) versehenen Schutzhülle (7) aus insbesondere durchsichtiger Kunststoff-Folie, vorzugsweise Schrumpffolie eingeschlossen ist.

5. Vorrichtung nach Anspruch 1 bis 4, dadurch gekennzeichnet, dass die Schutzhülle (7) oder der Deckel (5) des Hauptgefässes (1) eine im mittleren Bereich des Hilfsgefässes (4) angeordnete Markierung (6) zum Ansetzen des Stechwerkzeugs aufweisen.

**Claims**

1. A device for the generation of gas or gas mixtures so as to store in a gaseous atmosphere food products, particularly fruit and vegetables, or the like, within storage chambers or within gas-tight sealed storage or transport receptacles comprising a main container (1) sealed in a water-tight manner but being permeable to gases, which contains a starting solid substance (2) for the generation of the storage gas, and an auxiliary container (4) tightly sealed over all of its sides, which is housed in the main container (1) and holds a starting liquid substance for the generation of the storage gas, one of the walls bounding the auxiliary container located at the interior of the main container (1) being tearable by an external action, to cause the starting liquid substance and the starting solid substance to mingle with each other, whereby to start a chemical reaction between the two substances in order to generate the storage gas, characterized in that the auxiliary container (4) is blocked at a distance above the bottom of the basin-like main container (1) between supporting step-like portions (3, 103) of the main container sidewalls, and a lid (5) closes the top of the main container (1) in a firm but not-tight manner, the said lid (5), as well as the top wall closing the auxiliary container (4) and the bottom wall thereof being perforatable from the exterior in one single stroke.

2. The device according to Claim 1, characterized in that the step-like portions (3, 103) supporting the auxiliary container (4) consist of bulges forming recesses in the sidewalls of the main container (1).

3. The device according to any one of Claims 1 or 2, characterized in that the lid (5) is formed of a gas-permeable material, or of cardboard, particularly corrugated board.

4. The device according to any one of Claims 1 to 3, characterized in that the main container (1) is enclosed in a protective envelope (7) which is either tearable or provided with preferably lateral gas-escape apertures (107, 207), and which is made of a plastic foil material, particularly a transparent, and preferably a heat-shrinkable plastics foil.

5. The device according to Claims 1 to 4, characterized in that either the protective envelope (7) or the lid (5) of the main container (1) has a marking (6) which is provided in correspondence of the intermediate zone of the auxiliary container (4) for driving in the piercing tool.

**Revendications**

1. Dispositif pour la production de gaz ou de mélanges gazeux, pour entreposer sous atmosphère protectrice des denrées alimentaires, et notamment des fruits, des légumes ou des produits du même genre, dans des chambres de stockage étanches aux gaz ou dans des conteneurs d'entreposage et de transport, qui comprend un récipient principal (1) étanche à l'eau, mais perméable aux gaz, qui contient une substance de départ (2) solide, et un récipient auxiliaire (4), hermétiquement clos, qui est placé à l'intérieur du récipient principal (1), et qui contient une substance de départ liquide pour la production du gaz donnant une atmosphère protectrice, une paroi, délimitant le récipient auxiliaire (4) et se trouvant à l'intérieur du récipient principal (1), pouvant être percée par une action extérieure pour réunir la substance de départ liquide à la substance de départ solide et déclencher ainsi une réaction chimique entre les deux substances pour produire le gaz donnant l'atmosphère protectrice, caractérisé en ce que le récipient auxiliaire (4) est bloqué solidement à une distance convenable au-dessus du fond du récipient principal (1), en forme de cuvette (3, 103) entre des parties en décrochement formant appui ménagées dans les parois latérales du récipient principal (1) et un couvercle (5) fermant bien le récipient principal (1) vers le haut, mais d'une façon non étanche, ce couvercle (5), la paroi supérieure de fermeture et la paroi de fond du récipient auxiliaire (4) pouvant être percés en même temps de l'extérieur.

2. Dispositif suivant la revendication 1, caractérisé par le fait que les parties en décrochement (3, 103) formant appui pour le récipient auxiliaire (4), sont des excroissances en forme de niches, ménagées dans les parois latérales du récipient principal (1).

3. Dispositif suivant la revendication 1 ou 2, caractérisé en ce que le couvercle (5) est en matériau perméable aux gaz ou en carton, notamment en carton ondulé.

4. Dispositif suivant l'une des revendications 1 à 3, caractérisé par le fait que le récipient principal (1) est enveloppé dans une enveloppe protectrice (7) pouvant être déchirée ou munie de préférence, d'ouvertures latérales (107, 207) d'évacuation du gaz, et constituée d'une feuille en matière plastique, transparente et, de préférence d'une feuille rétractable.

5. Dispositif selon l'une des revendications 1 à 4, caractérisé par le fait que l'enveloppe protectrice (7) ou le couvercle (5) du récipient principal (1) présente, dans la zone centrale du récipient auxiliaire (4), un repère (6) pour l'application de l'outil de percement.

Fig. 3

Fig. 4

Fig. 2

Fig. 1